# EUROPÄISCHE PATENTSCHRIFT

(11) **EP 1 746 015 B1**
(45) Veröffentlichungstag und Bekanntmachung des Hinweises auf die Patenterteilung: **16.04.2008**
(21) Anmeldenummer: 06014311.2
(22) Anmeldetag: 11.07.2006
(51) Int. Cl.: B62D 5/093, B62D 5/32

(54) **Hydraulische Lenkeinrichtung**
Hydraulic steering device
Dispositif de direction hydraulique

(30) Priorität: 19.07.2005 DE 102005033576
(43) Veröffentlichungstag der Anmeldung: 24.01.2007
(73) Patentinhaber: Sauer-Danfoss ApS, 6430 Nordborg (DK)
(72) Erfinder: Soerensen, Ole Vincentz, 6430 Nordborg (DK)
(74) Vertreter: Knoblauch, Andreas

(56) Entgegenhaltungen:
- EP-A2- 0 137 184
- DE-A1- 2 723 490
- DE-A1- 3 616 041
- DE-A1- 3 935 933
- DE-A1- 4 301 012
- DE-C1- 3 146 302

## Beschreibung

Die Erfindung betrifft eine hydraulische Lenkeinrichtung nach dem Oberbegriff des Anspruchs 1 mit einer hydraulisch betätigbaren Lenkventilanordnung, Lenkmotoranschlüssen, die über die Lenkventilanordnung mit Versorgungsanschlüssen verbindbar sind, und einer Lenkeinheit, bei der die Lenkventilanordnung ein Richtungsventil und ein Mengenventil aufweist.

Eine ähnliche Lenkeinrichtung ist beispielsweise aus DE 10 2004 027 971 A1 bekannt. Wenn ein Fahrer eines mit einer derartigen Lenkeinrichtung versehenen Fahrzeuges das Fahrzeug lenken möchte, betätigt er die Lenkeinheit. In Abhängigkeit von der Betätigung der Lenkeinheit werden hydraulische Drücke erzeugt, die die Lenkventilanordnung betätigen und dadurch einen Strömungspfad von den Versorgungsanschlüssen zu den Lenkmotoranschlüssen und zurück freigeben.

Man hat nun beobachtet, daß bei derartigen Lenkeinrichtungen in manchen Fällen ein Unterschied im Lenkverhalten auftritt und zwar in Abhängigkeit davon, ob man nach links oder nach rechts lenkt. Dies wird von einem Fahrer vielfach als unangenehm empfunden.

Abhilfe könnte man dadurch schaffen, daß man die Fertigungsgenauigkeit erhöht und alle in Frage stehenden Bereiche, Kanäle, Druckangriffsflächen, etc., die für die Bestimmung des Durchflusses der hydraulischen Flüssigkeit von Bedeutung sind, möglichst gleich ausbildet. Hierfür ist aber ein erheblicher Fertigungsaufwand erforderlich.

DE 36 16 041 A1 zeigt eine hydraulische Steuereinrichtung für Servomotoren, bei der ein von einer ersten Hydraulikpumpe geförderter Ölstrom einem Steuerventil einer Lenkeinheit zugeführt wird, wodurch je nach Stellung der Lenkeinheit ein Steuerkolben des Steuerventils eine dem Stellsignal der Lenkeinheit entsprechende Ölmenge zu der dem Lenkeinschlag korrespondierenden Seite eines Lenkmotors zuführt. Weiterhin ist ein zweiter Hydraulikmotor vorgesehen, wobei der von ihm erzeugte Ölstrom über ein Verteilventil in Abhängigkeit des vom Lenksystem benötigten Ölbedarfs bevorzugt an das Lenksystem, und sekundär an eine anderweitige Hydraulikeinheit geliefert wird.

DE 31 46 302 C1 offenbart eine hydraulische Steuervorrichtung für einen Servomotor gemäß dem Oberbegriff des Anspruchs 1, welche eine Lenkeinheit aufweist, wobei in Abhängigkeit des von der Lenkeinheit gelieferten Signals eine Lenkventilanordnung angesteuert wird, die ein Richtungsventil und ein Mengenventil aufweist.

In EP 0 137 184 A2 wird ein Hydrauliksystem mit einem Prioritätsventil zur Aufteilung des von einer Pumpe gelieferten Hydraulik-Ölstroms zu einer bevorzugt belieferten Lenkeinheit und einer sekundären Hydraulikeinheit beschrieben. Die Lenkeinheit weist einen Regelzylinder auf, der in Abhängigkeit eines Lenkeinschlags Menge und Richtung des von seinem Lenkzylinder abgegebenen Ölstroms regelt. Weiterhin ist ein Blockierventil vorgesehen, das eine Signalleitung sofort blockiert, sobald der in ihr herrschende Druck größer ist, als der Druck des über die Zuführleitung von der Pumpe gelieferten Ölstroms. Dadurch kann ein Kraftstoß auf das Lenkrad verhindert werden, wenn auf die Räder, und damit auf die Lenkzylinder, eine größere äußere Kraft einwirkt.

In DE 43 01 012 A1 ist eine Speicherschaltung für einen Lenkkreislauf beschrieben. Nach einem Prioritätsventil, das den von einer Pumpe kommenden Hydrauliköl-Volumenstrom auf einen bevorrechtigten Verbraucher und einen sekundären Verbraucher verteilt, ist ein zusätzlicher Druckspeicher angeordnet. Mit dem Druckspeicher können Schaltverzögerungen des Prioritätsventils und kurzzeitig auch ein Pumpenausfall überbrückt werden, so dass die Lenkeinheit nach wie vor den Lenkmotor ansteuern kann.

DE 39 35 933 A1 beschreibt eine besonders vorteilhafte Bauform für ein Prioritätsventil zur vorrangigen Speisung der Servolenkung eines Fahrzeugs. Die Servolenkung selbst weist eine Lenkeinheit auf, deren Regelventil ein kombiniertes Richtungs- und Mengenventil ansteuert, welches wiederum einen Servolenkungsmotor mit Hydrauliköl beaufschlagt.

Der Erfindung liegt die Aufgabe zugrunde, das Lenkverhalten auf einfache Weise zu vergleichmäßigen.

Diese Aufgabe wird bei einer hydraulischen Lenkeinrichtung der eingangs genannten Art, wobei die Lenkeinheit eine manuell betätigbare Steuereinrichtung aufweist, die einen Druckanschluß und zwei Richtungsanschlüsse aufweist dadurch gelöst, daß der Druckanschluß durch einen durch das Mengenventil hindurch geführten Leitungspfad mit einem Prioritätsventil verbunden ist.

Mit dieser Ausgestaltung erreicht man auf einfache Weise, daß das Lenkverhalten in beide Lenkrichtungen wesentlich besser aneinander angenähert werden kann. In vielen Fällen wird man sogar ein genau gleiches Lenkverhalten erreichen. Die Funktion der Mengeneinstellung wird vom Mengenventil übernommen. Unabhängig von der Richtung, in der das Fahrzeug gelenkt wird, liefert das Mengenventil die vom Fahrer über die Betätigung der Lenkeinheit vorgegebene Menge der Hydraulikflüssigkeit. Das Richtungsventil bestimmt nur noch die Richtung, in die das Fahrzeug gelenkt werden soll. Der Einfluß, den das Richtungsventil auf die Durchflußmenge der Hydraulikflüssigkeit nimmt, kann stark vermindert oder sogar eliminiert werden. Bei der Steuereinrichtung kann es sich beispielsweise um eine Einheit vom Typ "OSP" der Sauer-Danfoss ApS, Nordborg, Dänemark, handeln. Eine derartige Steuereinheit mißt in Abhängigkeit von der Betätigung eines Lenkhandrades eine bestimmte Menge an Hydraulikflüssigkeit, die über den Druckanschluß zugeführt wird, ab, und leitet sie über einen der Richtungsanschlüsse an das Richtungsventil weiter. Eine derartige Steuereinrichtung kann auch als Notlenkpumpe verwendet werden, wenn der hydraulische Versorgungsdruck ausfällt, beispielsweise bei Ausfall des Antriebsmotors des Fahrzeugs, der auch eine hydraulische Pumpe antreibt.

Hierbei ist bevorzugt, daß der Leitungspfad im Bereich einer Endstellung des Mengenventils, die einen maximalen Versorgungsdurchfluß zu den Lenkmotoranschlüssen erlaubt, gedrosselt ist. Die Drosselung kann auch so weit gehen, daß der Leitungspfad gesperrt ist. In diesem Fall bekommt der Fahrer über das Lenkhandrad ein Signal. Das Lenkhandrad läßt sich in diesem Fall nämlich nur mit einem erhöhten Moment drehen. Der Fahrer empfindet dann, daß sich das Fahrzeug schwerer lenken läßt. Der Fahrer weiß dann, daß sich das Mengenventil in der maximalen Öffnungsstellung befindet und eine höhere Lenkgeschwindigkeit nicht mehr möglich ist.

Vorzugsweise ist in Richtung von den Versorgungsanschlüssen zu den Lenkmotoranschlüssen das Richtungsventil hinter dem Mengenventil angeordnet. Dies vereinfacht die Leitungsführung in erheblichem Maße.

Vorzugsweise ist eine Steuereingangsanordnung des Richtungsventils mit der Lenkeinheit und ein Steuereingang des Mengenventils mit dem Richtungsventil verbunden. Man steuert also das Mengenventil durch das Richtungsventil hindurch an. Dies hat den Vorteil, daß man auf einfache Weise dafür sorgen kann, daß bei einer Betätigung der Lenkeinheit zunächst das Richtungsventil anspricht und betätigt wird. Erst wenn die Richtung festgelegt ist, wird auch das Mengenventil betätigt. Damit läßt sich das Richtungsventil konstruktiv sehr einfach aufbauen. Man muß nicht mehr dafür sorgen, daß sich hier Drosselstellen allmählich öffnen, um ein ruckfreies Lenken zu ermöglichen. Vielmehr kann man das Richtungsventil praktisch als "an-aus-Ventil" ausbilden. Die Mengensteuerung einschließlich eines gesteuerten Öffnens von Drosselstellen kann durch das Mengenventil übernommen werden.

Vorzugsweise weist das Mengenventil einen größeren Betätigungsdruck als das Richtungsventil auf. Auch mit dieser Maßnahme wird sichergestellt, daß das Richtungsventil früher, d.h. bei einem geringeren Druck, betätigt wird als das Mengenventil. Das Richtungsventil ist in die eine oder in die andere Richtung auf jeden Fall offen, wenn das Mengenventil anfängt, Hydraulikflüssigkeit zu den Arbeitsanschlüssen zu leiten.

Bevorzugterweise ist zwischen dem Richtungsventil und dem Mengenventil ein Wechselventil angeordnet, dessen Ausgang mit einem Versorgungseingang des Richtungsventils verbunden ist, der in Abhängigkeit von einer Betätigungsrichtung des Richtungsventils mit einem der beiden Lenkmotoranschlüsse verbindbar ist, wobei ein erster Eingang des Wechselventils mit einem Druckausgang des Mengenventils verbunden ist und ein zweiter Eingang des Wechselventils durch das Richtungsventil mit der Lenkeinheit verbindbar ist. Diese Ausgestaltung ist insbesondere dann von Vorteil, wenn die Stauereinrichtung bei Ausfall der Hydraulikpumpe als Notlenkpumpe verwendet werden soll. Das Wechselventil sorgt dann nämlich dafür, daß die Hydraulikflüssigkeit von der Notlenkpumpe nicht mehr über das Mengenventil zu den Lenkmotoranschlüssen geführt werden muß, sondern unmittelbar über das Wechselventil und durch das Richtungsventil zu den Lenkmotoranschlüssen fließen kann.

Auch ist bevorzugt, daß das Richtungsventil und das Mengenventil jeweils einen Schieber aufweisen. Die Verwendung von Schieberventilen in Lenkeinrichtungen hat sich bewährt. Durch eine axiale Verlagerung der Schieber lassen sich die verschiedenen Stellungen der Ventile auf einfache Weise einstellen.

Vorzugsweise weist ein mit einem Tank verbundener Versorgungsanschluß ein zum Tank hin öffnendes, vorgespanntes Rückschlagventil auf. Damit wird sichergestellt, daß im hydraulischen System der Lenkeinrichtung immer ein vorbestimmter Mindestdruck aufrecht erhalten wird. Dieser Mindestdruck wird durch die Vorspannung des Rückschlagventils vorgegeben. Er kann beispielsweise in der Größenordnung von 4 bis 5 bar liegen.

Auch ist von Vorteil, wenn die Lenkeinheit ein elektrisch betätigbares Steuerventil aufweist. Dieses Steuerventil kann alternativ oder zusätzlich zu der mechanisch betätigbaren Steuereinrichtung vorgesehen sein. Bei dem Steuerventil kann es sich beispielsweise um ein elektrisch betätigbares Proportionalventil vom Typ PVE der Sauer-Danfoss ApS, Nordborg, Dänemark, handeln.

Hierbei ist bevorzugt, daß die Steuereinrichtung und das Steuerventil über eine Wechselventilanordnung mit der Steuereingangsanordnung des Richtungsventils verbunden sind. Das Richtungsventil reagiert also immer auf den höheren der beiden Drücke von Steuerventil und Steuereinrichtung. Wenn der Ausgangsdruck des Steuerventils begrenzt ist, kann man so auf einfache Weise dafür sorgen, daß das Lenken über ein Lenkhandrad und die Steuereinrichtung immer Priorität über das Lenken mit dem Steuerventil hat.

Auch ist von Vorteil, wenn das Steuerventil mit dem Steuereingang des Mengenventils verbunden ist, wobei das Mengenventil über eine Rückmeldeeinrichtung mit dem Steuerventil verbunden ist. Damit wird das Mengenventil nicht mehr nur durch das Richtungsventil hindurch angesteuert. Über die Rückmeldeeinrichtung, beispielsweise einen Positionssensor, der auf den Schieber des Mengenventils reagiert, läßt sich aber immer sicherstellen, daß das Mengenventil die Hydraulikflüssigkeit zu den Lenkmotoranschlüssen in gewünschter Weise durchläßt.

Die Erfindung wird im folgenden anhand von bevorzugten Ausführungsbeispielen in Verbindung mit der Zeichnung beschrieben. Hierin zeigen:
- Fig. 1: eine erste Ausführungsform einer hydraulischen Lenkeinrichtung und
- Fig. 2: eine zweite Ausführungsform einer hydraulischen Lenkeinrichtung.

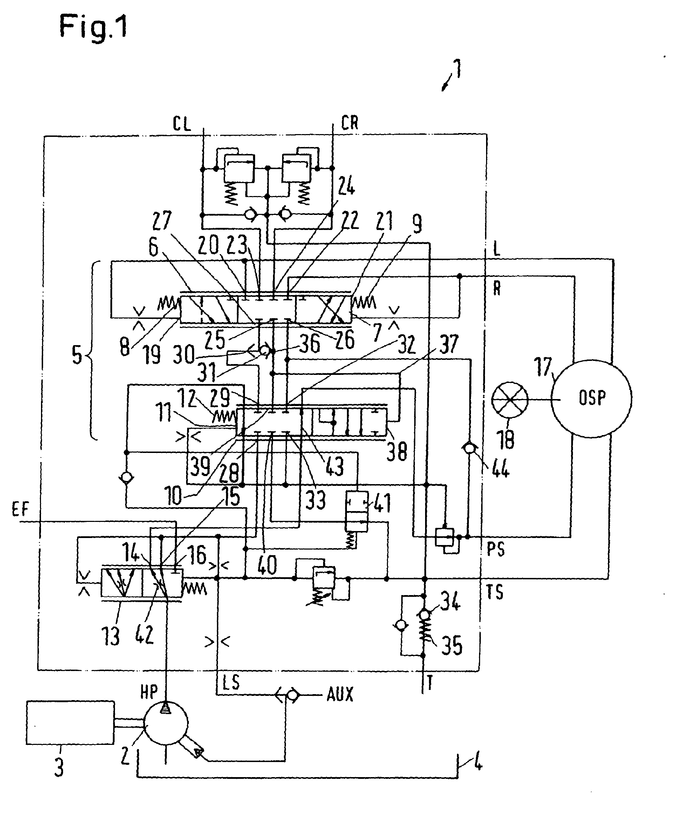

Fig. 1 zeigt eine hydraulische Lenkeinrichtung 1 mit Lenkmotoranschlüssen CL, CR und Versorgungsanschlüssen HP, T. Zusätzlich ist auch noch ein Lastfühlanschluß LS bei den Versorgungsanschlüssen HP, T vorgesehen.

An die Lenkmotoranschlüsse CL, CR ist ein Lenkmotor anschließbar, der zum Lenken eines nicht näher dargestellten Fahrzeugs dient. An einen Hochdruckanschluß HP ist eine Pumpe 2 angeschlossen, die von einem Motor 3 angetrieben ist, beispielsweise dem Antriebsmotor des Fahrzeugs. Der andere Versorgungsanschluß T mündet in einen Tank 4.

Die Lenkeinrichtung 1 weist eine Lenkventilanordnung 5 auf, die sowohl eine Auslenkrichtung als auch eine Auslenkgeschwindigkeit der gelenkten Organe des Fahrzeugs bestimmt.

Die Lenkventilanordnung weist ein Richtungsventil 6 mit einem Richtungsventilschieber 7 auf. Der Richtungsventilschieber ist durch zwei Federn 8, 9 in eine Neutralstellung belastet. Die Federn 8, 9 definieren einen Betätigungsdruck, der beispielsweise in der Größenordnung von 3 bis 5 bar liegt.

Die Lenkventilanordnung 5 weist weiterhin ein Mengenventil 10 mit einem Mengenventilschieber 11 auf, der gegen die Kraft einer Feder 12 bewegbar ist. Die Kraft der Feder 12 entspricht einem Druck von etwa 5 bis 10 bar. Die Kraft der Feder 12 ist in jedem Fall größer als die Kraft der Federn 8, 9.

Der Versorgungsanschluß HP ist verbunden mit einem Prioritätsventil 13, das drei Ausgänge 14, 15, 16 aufweist, wobei der Ausgang 16 mit einem Anschluß EF versehen ist, über den weitere hydraulische Verbraucher versorgt werden können.

Eine hydraulische Steuereinrichtung 17, beispielsweise eine Steuereinrichtung OSP der Sauer-Danfoss ApS, Nordborg, Dänemark, ist über ein Lenkhandrad 18 betätigbar. Die Steuereinrichtung 17 weist einen Anschluß PS auf, über den die Steuereinrichtung 17 mit Hydraulikflüssigkeit unter Druck versorgt wird, wie weiter unten erläutert wird. Ferner weist die Steuereinrichtung einen Anschluß TS auf, der mit dem Versorgungsanschluß T verbunden ist, wie ebenfalls weiter unten erläutert werden wird.

Die Steuereinrichtung 17 weist einen ersten Richtungsanschluß L und einen zweiten Richtungsanschluß R auf. Der Richtungsanschluß L ist zweifach mit dem Richtungsventil 6 verbunden. Zum einen ist der Richtungsanschluß L mit einem Steuereingang 19 verbunden, durch den Druck aus dem Richtungsanschluß L auf den Schieber 7 wirkt. Zum anderen ist der Richtungsanschluß L verbunden mit einem ersten Richtungseingang 20 des Richtungsventils 6.

In ähnlicher Weise ist ein zweiter Richtungseingang R der Steuereinrichtung 17 verbunden mit einem Steuereingang 21, durch den Druck auf den Schieber 7 des Richtungsventils 6 wirkt, und mit einem zweiten Richtungseingang 22.

Das Richtungsventil 6 weist einen ersten Richtungsausgang 23 auf, der mit dem Lenkmotoranschluß CL verbunden ist, und einen zweiten Richtungsausgang 24, der mit dem Lenkmotoranschluß CR verbunden ist.

Das Richtungsventil 6 weist einen Steuerausgang 25, einen Rückflußausgang 26 und einen Versorgungseingang 27 auf.

Das Mengenventil 10 weist einen Druckeingang 28 auf, der mit dem zweiten Ausgang 15 des Prioritätsventils verbunden ist. Sobald der Schieber 11 des Mengenventils 10 betätigt wird, wird der Druckeingang 28 verbunden mit einem Druckausgang 29, der mit einem ersten Eingang 30 eines Wechselventils 31 verbunden ist, dessen Ausgang mit dem Versorgungseingang 27 des Richtungsventils 6 verbunden ist.

Der Rückflußausgang 26 des Richtungsventils 6 ist verbunden mit einem Rückflußeingang 32 des Mengenventils 10, der mit einem Rückflußanschluß 33 des Mengenventils 10 verbunden wird, sobald der Schieber 11 des Mengenventils 10 betätigt wird. Der Rückflußanschluß 33 ist mit dem Anschluß TS der Steuereinrichtung 17 verbunden. Dieser Anschluß TS ist über ein vorgespanntes Rückschlagventil 34 mit dem Versorgungsanschluß T und damit mit dem Tank 4 verbunden. Das Rückschlagventil 34 weist eine Vorspannfeder 35 auf, die beispielsweise für einen Mindestdruck am Anschluß TS von 4,5 bar sorgt.

Der Steuerausgang 25 des Richtungsventils ist zum einen mit dem zweiten Eingang 36 des Wechselventils 31 verbunden. Zum anderen ist er über eine Leitung 37 mit einem Steuereingang 38 des Mengenventils 10 verbunden. Ein Druck am Steuereingang 38 wirkt entgegen der Kraft der Feder 12. Schließlich ist der Steuerausgang 25 noch mit einem Eingang 39 des Mengenventils 10 verbunden, der bei Betätigung des Schiebers 11 mit einem Ausgang 40 verbunden wird, der über ein Sperrventil 41, das durch einen Druck am Druckausgang 29 des Mengenventils 10 geschlossen werden kann, mit dem Anschluß TS verbunden ist.

Der erste Ausgang 14 des Prioritätsventils 13, der in der dargestellten Position des Prioritätsventils 13, in der ausschließlich die Lenkeinrichtung 1 mit Hydraulikflüssigkeit versorgt ist, gedrosselt ist (siehe Drossel 42), ist über einen Leitungspfad 43, der im Mengenventil 10 ausgebildet ist, mit dem Anschluß PS der Steuereinrichtung 17 verbunden. Der Leitungspfad 43 bleibt über den größten Teil der Bewegung des Schiebers 11 des Mengenventils 10 geöffnet. Lediglich im Bereich einer Endstellung, in der das Mengenventil 10 die maximale Menge an Hydraulikflüssigkeit durchfließen läßt, ist der Leitungspfad 43 unterbrochen, so daß dem Anschluß PS der Steuereinrichtung 17 über diesen Leitungspfad 43 keine Hydraulikflüssigkeit mehr zugeführt werden kann.

In an sich bekannter Weise ist der zweite Ausgang 15 des Prioritätsventils mit dem Lastfühlanschluß LS verbunden.

Dargestellt sind darüber hinaus noch einige Nachsaug-, Überdruck- und Druckregelventile, die nicht näher erläutert werden, weil sie an sich bekannt sind.

Wenn nun das Lenkhandrad 18 gedreht wird, um beispielsweise das Fahrzeug nach rechts zu lenken, dann muß der Lenkmotoranschluß CR mit Hydraulikflüssigkeit unter Druck versorgt werden. Um dies zu bewerkstelligen, gibt die Steuereinrichtung 17 über den Richtungsausgang R einen Druck auf den Steuereingang 21 des Richtungsventils 6, wodurch der Schieber 7 nach links (bezogen auf die Darstellung der Fig. 1) verschoben wird. Dadurch gelangt Druck vom zweiten Richtungseingang 22 zum Steuerausgang 25. Gleichzeitig wird der erste Richtungsausgang 23, der mit dem Lenkmotoranschluß CL verbunden ist, mit dem Rückflußausgang 26 verbunden, von dem Hydraulikflüssigkeit über das Mengenventil 10 abfließen kann, sobald dies geöffnet hat.

Der Druck am Steuerausgang 25 wird auf den Steuereingang 38 des Mengenventils 10 geleitet und verschiebt dort den Schieber 11 ebenfalls nach links. Dadurch wird der Druckeingang 28 mit dem Druckausgang 29 verbunden und die dort austretende Hydraulikflüssigkeit gelangt über das Wechselventil 31 und den Versorgungseingang 27 des Richtungsventils 6 zum zweiten Richtungsausgang 24 und von dort zum Lenkmotoranschluß CR. Die Stellung des Schiebers 11 des Mengenventils 10 bestimmt dabei die Menge der Hydraulikflüssigkeit, die dem Lenkmotoranschluß CR zugeführt wird.

Sobald der Schieber 11 des Mengenventils 10 in einen Endbereich verschoben worden ist, in dem der maximale Durchfluß der Hydraulikflüssigkeit freigegeben wird, wird der Leitungspfad 43 unterbrochen und die Steuereinrichtung 17 erhält an ihrem Anschluß PS über ein Rückschlagventil 44 nur noch den vom Lenkmotoranschluß CL zurückfließenden Anteil der Hydraulikflüssigkeit. Dies hat zur Folge, daß das Drehen des Lenkhandrades 18 erschwert wird und der Fahrer bekommt dadurch signalisiert, daß die maximale Lenkgeschwindigkeit erreicht ist.

Wird umgekehrt das Fahrzeug in die entgegengesetzte Richtung gelenkt, dann gibt die Steuereinrichtung 17 einen Druck über den Richtungsausgang L ab, der dann auf den ersten Steuereingang 19 des Richtungsventils 6 wirkt und den Schieber 7 nach rechts verschiebt. Dadurch gelangt dann der Druck vom ersten Richtungseingang 20 zum Steuerausgang 25 des Richtungsventils und das Mengenventil 10 wird auf die gleiche Weise angesteuert, wie zuvor beim Lenken nach rechts.

Sollte der Motor 3 ausfallen und die Pumpe 2 dementsprechend nicht fördern können, kann die Steuereinrichtung 17 als Notlenkpumpe verwendet werden. In diesem Fall wird der über den Richtungseingang 20, 22 zugeführte Druck, der ebenfalls über den Steuerausgang 25 ausgegeben wird, an den zweiten Eingang 36 des Wechselventils 31 weitergegeben. Da am ersten Eingang 30 des Wechselventils 31 kein Druck ansteht (die Pumpe 2 arbeitet nicht und das Mengenventil 10 ist geschlossen), wird der Druck vom Richtungsausgang L, R der Steuereinrichtung 17 dann an den entsprechenden Richtungsausgang 23, 24 des Richtungsventils 6 weitergeleitet.

Das Sperrventil 41 kann verwendet werden, um einen festen Anschlag für die Bewegung des Lenkhandrads 18 zu erzeugen, wenn der zugehörige Lenkzylinder (oder ein anderer Arbeitsmotor) in der Endposition ist.

Die Federvorspannung des Sperrventils 41 ist kleiner als die Federvorspannung des Prioritätsventils 13. Dies führt dazu, daß das Sperrventil 41 im Normalbetrieb offen ist. Wenn hingegen der Lenkzylinder in einer Endposition steht, steigt der Druck an. Ein Pilotventil in der LS-Leitung öffnet für den Lastfühldruck zum Tank. Das Rückschlagventil in der Lastfühlleitung verhindert einen Rückfluß und es entsteht ein Druckunterschied über dieses Rückschlagventil, der der Federvorspannung des Prioritätsventils 13 entspricht. Da das Sperrventil 41 vom Druckunterschied über dieses Rückschlagventil gesteuert wird, und da dieser Druckunterschied in der Endposition des Lenkzylinders die Federvorspannung des Sperrventils 41 übersteigt, geht das Sperrventil 41 in die Schließposition. Da jetzt der Weg der Pilotflüssigkeit zum Tank 4 gesperrt ist, wird das Lenkradmoment an der Lenkeinheit 17 ansteigen und der Fahrer wird dies als festen Anschlag auffassen.

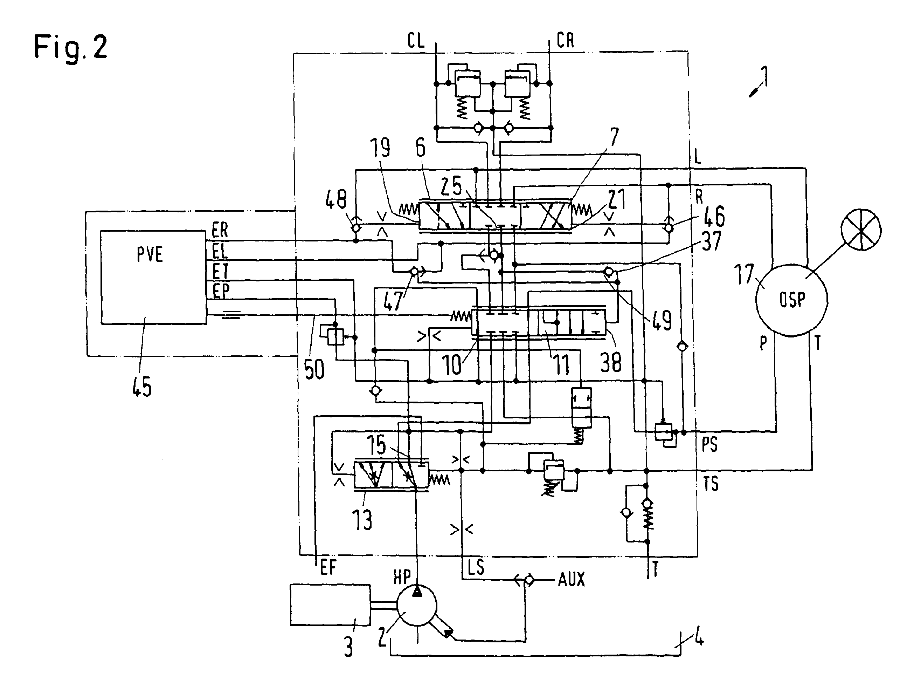

Fig. 2 zeigt eine abgewandelte Ausführungsform einer Lenkeinrichtung 1, bei der gleiche Elemente mit den gleichen Bezugszeichen wie in Fig. 1 bezeichnet sind. Da die Lenkeinrichtung 1 nach Fig. 2 in weiten Teilen mit der Lenkeinrichtung nach Fig. 1 übereinstimmt, werden hier lediglich die Unterschiede erläutert.

Zusätzlich zu der Steuereinrichtung 17 weist die Lenkeinrichtung 1 ein elektrisch betätigbares Steuerventil 45 auf, beispielsweise ein elektrisch betätigbares Proportionalventil vom Typ PVE der Sauer-Danfoss ApS, Nordborg, Dänemark.

Das Steuerventil PVE weist einen Richtungsausgang ER zum Lenken des Fahrzeugs nach rechts, einen Richtungsausgang EL zum Lenken des Fahrzeugs nach links, einen Tankausgang ET und einen Pumpeneingang EP auf. Der Pumpeneingang EP ist mit dem Prioritätsventil 13 verbunden und zwar mit dem zweiten Ausgang 15. Der Tankausgang ET ist mit dem Punkt TS verbunden.

Der Richtungsausgang ER ist über ein Wechselventil 46 mit dem Steuereingang 21 des Richtungsventils 6 verbunden und steuert dementsprechend den Schieber 7 so, daß ein Pfad zum Lenkmotoranschluß CR freigegeben wird. Ferner ist der Richtungsanschluß ER über ein Wechselventil 47 mit dem Steuereingang 38 des Mengenventils 10 verbunden.

Der Richtungsausgang EL des Steuerventils 45 ist in ähnlicher Weise mit dem Steuereingang 19 des Richtungsventils 6 verbunden und zwar über ein Wechselventil 48. Darüber hinaus ist der Richtungsausgang EL über das Wechselventil 47 ebenfalls mit dem Steuereingang 38 des Mengenventils 10 verbunden.

Die Arbeitsweise ist ähnlich wie bei der Lenkeinrichtung nach Fig. 1. In Abhängigkeit davon, ob die Steuereinrichtung 17 oder das Steuerventil 45 den höheren Druck liefert, wird das Richtungsventil 6 über die Steuereinrichtung 17 oder das Steuerventil 45 betätigt. Wenn die Steuereinrichtung 17 einen höheren Druck als das Steuerventil liefert, dann wird auch das Mengenventil 10 von der Steuereinrichtung 17 gesteuert. Hierzu ist ein Rückschlagventil 49 in der Leitung zwischen dem Steuerausgang 25 des Richtungsventils 6 und dem Steuereingang 38 vorgesehen und zwar vor einem Punkt, in dem der Ausgang des Wechselventils 47 in diese Steuerleitung 37 mündet.

Der Schieber 11 des Mengenventils 10 ist über einen Positionsmelder 50 mit dem Steuerventil 45 verbunden. Das Steuerventil 45 ist also jederzeit in der Lage, einen Druck an den Richtungsausgängen ER, EL so zu steuern, daß die gewünschte Menge an Hydraulikflüssigkeit zu dem jeweils ausgewählten Lenkmotoranschluß CR, CL fließt.

## Patentansprüche

1. Hydraulische Lenkeinrichtung (1) mit einer hydraulisch betätigbaren Lenkventilanordnung (5), Lenkmotoranschlüssen (CL, CR), die über die Lenkventilanordnung (5) mit Versorgungsanschlüssen (14, 28) verbindbar sind, und einer Lenkeinheit (17, 45), bei der die Lenkventilanordnung (5) ein Richtungsventil (6) und ein Mengenventil (10) aufweist, wobei die Lenkeinheit (17, 45) eine manuell betätigbare Steuereinrichtung (17) aufweist, die einen Druckanschluß (PS) und zwei Richtungsanschlüsse (L, R) aufweist, **dadurch gekennzeichnet, daß** der Druckanschluß (PS) durch einen durch das Mengenventil (10) hindurch geführten Leitungspfad (43) mit einem Prioritätsventil (13) verbunden ist.

2. Lenkeinrichtung nach Anspruch 1, **dadurch gekennzeichnet, daß** der Leitungspfad (43) im Bereich einer Endstellung des Mengenventils (10), die einen maximalen Versorgungsdurchfluß zu den Lenkmotoranschlüssen (CL, CR) erlaubt, gedrosselt ist.

3. Lenkeinrichtung nach Anspruch 1 oder 2, **dadurch gekennzeichnet, daß** in Richtung von den Versorgungsanschlüssen (HP, T) zu den Lenkmotoranschlüssen (CR, CL) das Richtungsventil (6) hinter dem Mengenventil (10) angeordnet ist.

4. Lenkeinrichtung nach Anspruch 1 bis 3, **dadurch gekennzeichnet, daß** eine Steuereingangsanordnung (19, 21) des Richtungsventils (6) mit der Lenkeinheit (17, 45) und ein Steuereingang (38) des Mengenventils (10) mit dem Richtungsventil (6) verbunden ist.

5. Lenkeinrichtung nach einem der Ansprüche 1 bis 5, **dadurch gekennzeichnet, daß** das Mengenventil (10) einen größeren Betätigungsdruck als das Richtungsventil (6) aufweist.

6. Lenkeinrichtung nach einem der Ansprüche 1 bis 5, **dadurch gekennzeichnet, daß** zwischen dem Richtungsventil (6) und dem Mengenventil (10) ein Wechselventil (31) angeordnet ist, dessen Ausgang mit einem Versorgungseingang (27) des Richtungsventils (6) verbunden ist, der in Abhängigkeit von einer Betätigungsrichtung des Richtungsventils (6) mit einem der beiden Lenkmotoranschlüsse (CL, CR) verbindbar ist, wobei ein erster Eingang (30) des Wechselventils (31) mit einem Druckausgang (29) des Mengenventils (10) verbunden ist und ein zweiter Eingang (36) des Wechselventils (31) durch das Richtungsventil (6) mit der Lenkeinheit (17) verbindbar ist.

7. Lenkeinrichtung nach einem der Ansprüche 1 bis 6, **dadurch gekennzeichnet, daß** das Richtungsventil (6) und das Mengenventil (10) jeweils einen Schieber (7, 11) aufweisen.

8. Lenkeinrichtung nach einem der Ansprüche 1 bis 7, **dadurch gekennzeichnet, daß** ein mit einem Tank (4) verbundener Versorgungsanschluß (T) ein zum Tank (4) hin öffnendes, vorgespanntes Rückschlagventil (34) aufweist.

9. Lenkeinrichtung nach einem der Ansprüche 1 bis 8, **dadurch gekennzeichnet, daß** die Lenkeinheit (17, 45) ein elektrisch betätigbares Steuerventil (45) aufweist.

10. Lenkeinrichtung nach Anspruch 9, **dadurch gekennzeichnet, daß** die Steuereinrichtung (17) und das Steuerventil (45) über eine Wechselventilanordnung (46, 48) mit der Steuereingangsanordnung (19, 21) des Richtungsventils (6) verbunden sind.

11. Lenkeinrichtung nach Anspruch 9 oder 10, **dadurch gekennzeichnet, daß** das Steuerventil (45) mit dem Steuereingang (38) des Mengenventils (10) verbunden ist, wobei das Mengenventil (10) über eine Rückmeldeeinrichtung (50) mit dem Steuerventil (45) verbunden ist.

## Claims

1. Hydraulic steering arrangement (1) with a hydraulically actuated steering valve arrangement (5), steering motor connections (CL, CR), which are connectable to supply connections (14, 28) via the steering valve arrangement (5), and a steering unit (17, 45), the steering valve arrangement (5) comprising a directional valve (6) and a flow control valve (10), the steering unit (17, 45) having a manually actuated control arrangement (17), which comprises a pressure connection (PS) and two directional connections (L, R), **characterised in that** the pressure connection (PS) is connected to a priority valve (13) by means of a path (43) led through the flow control valve (10).

2. Steering arrangement according to claim 1, **characterised in that** in the area of an end position of the flow control valve (10), which permits a maximum supply flow to the steering motor connections (CL, CR), the path (43) is throttled.

3. Steering arrangement according to claim 1 or 2, **characterised in that** in the direction from the supply connections (HP, T) to the steering motor connections (CR, CL) the directional valve (6) is placed after the flow control valve (10).

4. Steering arrangement according to claim 1 to 3, **characterised in that** a control inlet arrangement (19, 21) of the directional valve (6) is connected to the steering unit (17, 45) and a control inlet (38) of the flow control valve (10) is connected to the directional valve (6).

5. Steering arrangement according to one of the claims 1 to 4, **characterised in that** the flow control valve (10) has a larger activation pressure than the directional valve (6).

6. Steering arrangement according to one of the claims 1 to 5, **characterised in that** a change-over valve (31) is located between the directional valve (6) and the flow control valve (10), the outlet of the change-over valve (31) being connected to a supply inlet (27) of the directional valve (6), the supply inlet (27) being connected to one of the two steering motor connections (CL, CR) in dependence of an actuation direction of the directional valve (6), a first inlet (30) of the change-over valve (31) being connected to a pressure outlet (29) of the flow control valve (10) and a second inlet (36) of the change-over valve (31) being connected to the steering unit (17) via the directional valve (6).

7. Steering arrangement according to one of the claims 1 to 6, **characterised in that** the directional valve (6) and the flow control valve (10) each have a slide (7, 11) .

8. Steering arrangement according to one of the claims 1 to 7, **characterised in that** a supply connection (T) connected to a tank (4) has a preset non-return valve (34) opening in the direction of the tank (4).

9. Steering arrangement according to one of the claims 1 to 8, **characterised in that** the steering unit (17, 45) has an electrically actuated control valve (45).

10. Steering arrangement according to claim 9, **characterised in that** the control arrangement (17) and the control valve (45) are connected to the control inlet arrangement (19, 21) of the directional valve (6) via a change-over valve arrangement (46, 48).

11. Steering arrangement according to claim 9 or 10, **characterised in that** the control valve (45) is connected to the control inlet (38) of the flow control valve (10), the flow control valve (10) being connected to the control valve (45) via a feed-back unit (50).

## Revendications

1. Dispositif de direction hydraulique (1) comprenant un agencement de valve de direction (5) à actionnement hydraulique, des raccords de moteurs de direction (CL, CR) qui peuvent être connecté à des raccords d'alimentation (14, 28) via l'agencement de valve de direction (5), et une unité de direction (17, 45) dans lequel l'agencement de valve de direction (5) comprend une valve directionnelle (6) et une valve proportionnelle (10), ladite unité de direction (17, 45) comprenant un dispositif de commande (17) à actionnement manuel, qui comprend un raccord de pression (PS) et deux raccords directionnels (L, R), **caractérisé en ce que** le raccord de pression (PS) est connecté à une valve de priorité (13) via un trajet de canalisation (43) qui passe à travers la valve proportionnelle (10).

2. Dispositif de direction selon la revendication 1, **caractérisé en ce que** le trajet de canalisation (43) est étranglé dans la région d'une position de fin de course de la valve proportionnelle (10), qui permet un débit d'alimentation maximal vers les raccords de moteurs de direction (CL, CR).

3. Dispositif de direction selon la revendication 1 ou 2, **caractérisé en ce que** la valve directionnelle (6) est agencée derrière la valve proportionnelle (10) dans la direction allant des raccords d'alimentation (HP, T) vers les raccords de moteurs de direction (CR, CL).

4. Dispositif de direction selon la revendication 1 à 3, **caractérisé en ce qu'**un agencement d'entrée de commande (19, 21) de la valve directionnelle (6) est relié à l'unité de direction (17, 40), et une entrée de commande (38) de la valve proportionnelle (10) est reliée à la valve directionnelle.

5. Dispositif de direction selon l'une des revendications 1 à 5, **caractérisé en ce que** la valve proportionnelle (10) présente une pression d'actionnement plus forte que la valve directionnelle (6).

6. Dispositif de direction selon l'une des revendications 1 à 5, **caractérisé en ce que**, entre la valve directionnelle (6) et la valve proportionnelle (10), est agencée une valve inverseuse (31) dont la sortie est reliée à une entrée d'alimentation (27) de la valve directionnelle (6), ladite entrée pouvant être connectée, en fonction d'une direction d'actionnement de la valve directionnelle (6), à l'un des deux raccords de moteurs de direction (CL, CR), dans lequel une première entrée (30) de la valve inverseuse (31) est reliée à une sortie de pression (29) de la valve proportionnelle (10) et une seconde entrée (36) de la valve inverseuse (31) peut être reliée à l'unité de direction (17) via la valve directionnelle (6).

7. Dispositif de direction selon l'une des revendications 1 à 6, **caractérisé en ce que** la valve directionnelle (6) et la valve proportionnelle (10) comprennent chacune un tiroir (7, 11).

8. Dispositif de direction selon l'une des revendications 1 à 7, **caractérisé en ce qu'**un raccord d'alimentation (T) relié à un réservoir (4) comporte un clapet antiretour (34) sous précontrainte ouvert vers le réservoir (4).

9. Dispositif de direction selon l'une des revendications 1 à 8, **caractérisé en ce que** l'unité de direction (17, 45) comporte une valve de commande (45) à actionnement électrique.

10. Dispositif de direction selon la revendication 9, **caractérisé en ce que** le dispositif de commande (17) et la valve de commande (45) sont reliés à l'agencement d'entrée de commande (19, 21) de la valve directionnelle (6) via un agencement de valve inverseuse (46, 48).

11. Dispositif de direction selon la revendication 9 ou 10, **caractérisé en ce que** la valve de commande (45) est reliée à l'entrée de commande (38) de la valve proportionnelle (10), ladite valve proportionnelle (10) étant reliée à la valve de commande (45) par un dispositif de rétroaction (50).
